# EUROPÄISCHE PATENTANMELDUNG

(11) **EP 2 031 750 A2**
(43) Veröffentlichungstag der Anmeldung: **04.03.2009**
(21) Anmeldenummer: 08014603.8
(22) Anmeldetag: 18.08.2008
(51) Int. Cl.: H02P 13/06

(54) **Schaltungsanordnung zur Umschaltung zwischen zwei Spannungsstufen einer Spannungsversorgung**

(30) Priorität: 03.09.2007 DE 202007012310 U
(71) Anmelder: 3W Power Holdings B.V., 1161 AH Zwanenburg (NL)
(72) Erfinder: Schaffarra, Christian, 59602 Rüthen (DE)
(74) Vertreter: Graefe, Jörg

(57) **Zusammenfassung**

Die Erfindung betrifft eine Schaltungsanordnung (1) zur Umschaltung zwischen zumindest zwei Spannungsstufen einer Spannungsversorgungseinrichtung (T). Die Schaltungsanordnung (1) weist
- einen ersten Anschluss (A) zur Verbindung mit einem ersten Anschluss der Spannungsversorgungseinrichtung (T) mit einer Wechselspannung einer ersten Stufe auf;
- einen zweiten Anschluss (A2) zur Verbindung mit einem zweiten Anschluss der Spannungsversorgungseinrichtung (T) mit einer Wechselspannung einer zweiten Stufe auf,
- einen dritten Anschluss (A3) zur Verbindung mit einer Last (R, L) auf;

Der erste Anschluss (A1) ist über ein erstes Paar (P1) und der zweite Anschluss (A2) ist über ein zweites Paar (P2) von antiparallel geschalteten steuerbaren Stromventilen mit dem dritten Anschluss (A3) verbunden.

Die Schaltungsanordnung (1) zum Steuern der Stromventile (V1, V2, V3, V4) weist ein Steuermittel (S) auf mit dem die Spannungsversorgung von der einen Stufe auf die andere Stufe umgeschaltet werden kann.

Beim Umschalten von der ersten Stufe in die zweite Stufe oder umgekehrt wird das den Strom übernehmende Stromventil (V3, V1) zu einem Zeitpunkt (t_{c}) durchgeschaltet, der im Nulldurchgang des Stroms oder um eine Zeitspanne danach liegt.

## Beschreibung

Die Erfindung betrifft eine Schaltungsanordnung zur Umschaltung zwischen zumindest zwei Spannungsstufen einer Spannungsversorgungseinrichtung. Die Schaltungsanordnung weist einen ersten Anschluss zur Verbindung mit einem ersten Anschluss der Spannungsversorgungseinrichtung auf, an dem eine Wechselspannung einer ersten Stufe anliegt. Die Schaltungsanordnung weist ferner einen zweiten Anschluss zur Verbindung mit einem zweiten Anschluss der Spannungsversorgungseinrichtung auf, an welchem eine Wechselspannung einer zweiten Stufe anliegt, wobei die Wechselspannung der zweiten Stufe niedriger ist als die Wechselspannung der ersten Stufe. Die Schaltungsanordnung weist ferner einen dritten Anschluss zur Verbindung mit einer ohmsch-induktiven Last auf.

Die Schaltungsanordnungen zur zwei- oder mehrstufigen Spannungsversorgung sind beispielsweise aus der Druckschrift mit der Veröffentlichungsnummer DE 43 37 956 C1 bekannt. In der Einleitung dieser Druckschrift ist ein Leistungssteller beschrieben, der auf dem Prinzip einer einphasigen Spannungsfolgesteuerung beruht. Die in der Beschreibungseinleitung beschriebene Schaltungsanordnung umfasst einen Transformator mit einer primärseitigen und einer sekundärseitigen Wicklung, wobei die sekundärseitige Wicklung über die Wicklung verteilte Spannungsabgriffe aufweist. An jeden dieser Spannungsabgriffe ist jeweils ein Paar von antiparallel geschalteten elektronische Stromventile bildenden Thyristoren angeschlossen. Jeder Spannungsabgriff mit dem zugehörigen Paar von Thyristoren stellt eine Leistungsstufe dar. Die Last ist den Thyristoren nachgeschaltet und je nachdem welche Thyristoren angesteuert werden, erhält sie mehr oder weniger Leistung. Die Umschaltung zwischen den Stufen und die Umschaltung zwischen den Thyristoren einer Stufe erfolgt im Nulldurchgang der Spannung.

Ein Nachteil dieser Schaltungsanordnung ist, dass sie nicht mit einer ohmsch-induktiven Last betrieben werden kann, bei welcher der Strom der Last nacheilt. Während der Umschaltung der einen Leistungsstufe zur anderen oder umgekehrt kommt es zu einem Kurzschluss zwischen den jeweiligen Spannungsabgriffen des Transformators, was in den Eigenschaften der als Stromventile gewählten Thyristoren begründet ist. Der Leistungssteller ist daher nicht für ohmsch-induktive Lasten mit nacheilendem Strom geeignet.

Hier setzt die vorliegende Erfindung an.

Der vorliegenden Erfindung liegt die Aufgabe zugrunde, eine Schaltungsanordnung zur Umschaltung zwischen zwei Spannungsstufen einer Spannungsversorgungseinrichtung der eingangs genannten Art so fortzubilden, dass sie auch für die Verwendung mit ohmsch-induktiven Lasten geeignet ist.

Diese Aufgabe wird erfindungsgemäß dadurch gelöst, dass das Steuermittel geeignet und eingerichtet ist, beim Umschalten von der ersten Stufe in die zweite Stufe oder von der zweiten Stufe in die erste Stufe das den Strom übernehmende Ventil zu einem Zeitpunkt zum Durchschalten anzusteuern, der im Null-Durchgang des Stroms durch die ohmsch-induktive Last oder um eine Zeitspanne nach dem Null-Durchgang des Stroms durch die ohmsch-induktive Last liegt.

Durch die Verschiebung des Zündzeitpunkts, d. h. des Zeitpunkts, zu dem der Thyristor zum Durchschalten angesteuert wird, um die Phasenverschiebung des Stroms in den Zeitpunkt des Null-Durchgangs des Stroms oder einen späteren Zeitpunkt werden Kurzschlüsse zwischen den Paaren der Stromventile vermieden. Die Schaltungsanordnung ist daher zur Umschaltung zwischen verschiedenen Stufen der Spannungsversorgung der ohmsch-induktiven Last geeignet.

Eine erfindungsgemäße Schaltungsanordnung kann so ausgestaltet sein, dass das Steuermittel zum Umschalten zwischen den Stufen während einer steigenden Flanke der Spannung geeignet und eingerichtet ist. Das Steuermittel kann dann geeignet und eingerichtet sein, beim Umschalten von der zweiten Stufe auf die erste Stufe das den Strom übernehmende Stromventil des ersten Paares zu einem Zeitpunkt zum Durchschalten anzusteuern, der im Nulldurchgang des Stroms oder um eine vorteilhaft einstellbare Zeitspanne nach dem Nulldurchgang des Stroms liegt. Eine Umschaltung von der ersten Stufe auf die zweite Stufe erfolgt mit dem Steuermittel einer erfindungsgemäßen Schaltungsanordnung dann vorteilhaft zu einem Zeitpunkt, der im Null-Durchgang der Spannung, im Null-Durchgang des Stroms, zwischen dem Null-Durchgang der Spannung und dem Durchgang des Stroms oder um eine vorzugsweise einstellbare Zeitspanne nach dem Null-Durchgang des Stroms liegt.

Das Steuermittel einer erfindungsgemäßen Schaltungsanordnung kann ebenso zum Umschalten zwischen den Stufen während einer fallenden Flanke der Spannung geeignet und eingerichtet sein. Das Steuermittel ist dann vorteilhaft geeignet und eingerichtet, beim Umschalten von der ersten Stufe auf die zweite Stufe das den Strom übernehmende Stromventil des zweiten Paares zu einem Zeitpunkt zum Durchschalten anzusteuern, der im Nulldurchgang des Stroms oder um eine vorteilhaft einstellbare Zeitspanne nach dem Nulldurchgang des Stroms liegt. Zum Umschalten von der zweiten Stufe auf die erste Stufe kann das Steuermittel geeignet und eingerichtet sein, das den Strom übernehmende Stromventil des ersten Paares zu einem Zeitpunkt zum Durchschalten anzusteuern, der im Nulldurchgang der Spannung, im Nulldurchgang des Stroms, zwischen dem Nulldurchgang der Spannung und dem Nulldurchgang des Stroms oder um eine vorzugsweise einstellbare Zeitspanne nach dem Nulldurchgang des Stroms liegt.

Gemäß der Erfindung kann eine erfindungsgemäße Schaltungsanordnung Mittel zur Erkennung des Nulldurchgangs des Stroms und/oder des Null-Durchgangs der Spannung aufweisen. Das Mittel ist vorteilhaft mit dem Steuermittel verbunden.

Eine erfindungsgemäße Schaltungsanordnung kann ferner ein Mittel zum Einstellen des Zeitpunkts des Ansteuerns des den Strom übernehmenden Stromventils zum Durchschalten aufweisen. Der Zeitpunkt kann also unabhängig von den tatsächlichen Null-Durchgängen manuell eingestellt werden. Die Einstellung der Zeitspanne erfolgt dabei vorteilhaft unter Berücksichtigung der ohmsch-induktiven Last und der sich daraus ergebenden Phasenverschiebung des Stroms gegenüber der Spannung.

Ferner kann eine erfindungsgemäße Schaltungsanordnung ein Mittel zum Einstellen der Zeitspanne zwischen dem Null-Durchgang des Stroms und dem Zeitpunkt des Ansteuerns des den Strom übernehmenden Stromventils zum Durchschalten aufweisen. Mit diesem Mittel kann eine Zeitspanne eingestellt werden, die gewissermaßen als Sicherheitsintervall zwischen dem Verlöschen des Stroms durch das bisher stromführende Ventil und dem Zünden des stromübernehmenden Ventils liegt, um sicher zu gehen, dass kein Kurzschluss zwischen den Anschlüssen der Spannung sversorgung seinrichtungen erfolgt.

Gemäß der Erfindung können die Stromventile Thyristoren sein.

Ein Ausführungsbeispiel für eine erfindungsgemäße Schaltungsanordnung zur Umschaltung zwischen zwei Stufen einer Spannungsversorgung ist anhand der Zeichnungen näher beschrieben. Es zeigt
- Fig. 1: einen Teil eines Schaltbildes der erfindungsgemäßen Schaltungsanordnung vor dem Umschalten von der ersten Stufe zur zweiten Stufe der Spannungsversorgung,
- Fig. 2: den Teil eines Schaltbildes der Schaltungsanordnung nach dem Umschalten von der ersten Stufe zur zweiten Stufe der Spannungsversorgung,
- Fig. 3: Spannungs-Zeit- und Strom-Zeit-Diagramme während des Umschaltens von der ersten Stufe zur zweiten Stufe,
- Fig. 4: den Teil eines Schaltbildes der Schaltungsanordnung gemäß Fig. 1 und 2 vor dem Umschalten von der zweiten Stufe zur ersten Stufe der Spannungsversorgung,
- Fig. 5: den Teil eines Schaltbildes der Schaltungsanordnung nach dem Umschalten von der zweiten Stufe zu ersten Stufe der Spannungsversorgung,
- Fig. 6: ein Strom- und ein Spannungs-Zeit-Diagramm während des Umschaltens von der zweiten Stufe zur ersten Stufe und
- Fig. 7: ein Blockschaltbild der Schaltungsanordnung mit einer daran angeschlossenen ohmschen-induktiven Last in schematischer Darstellung.

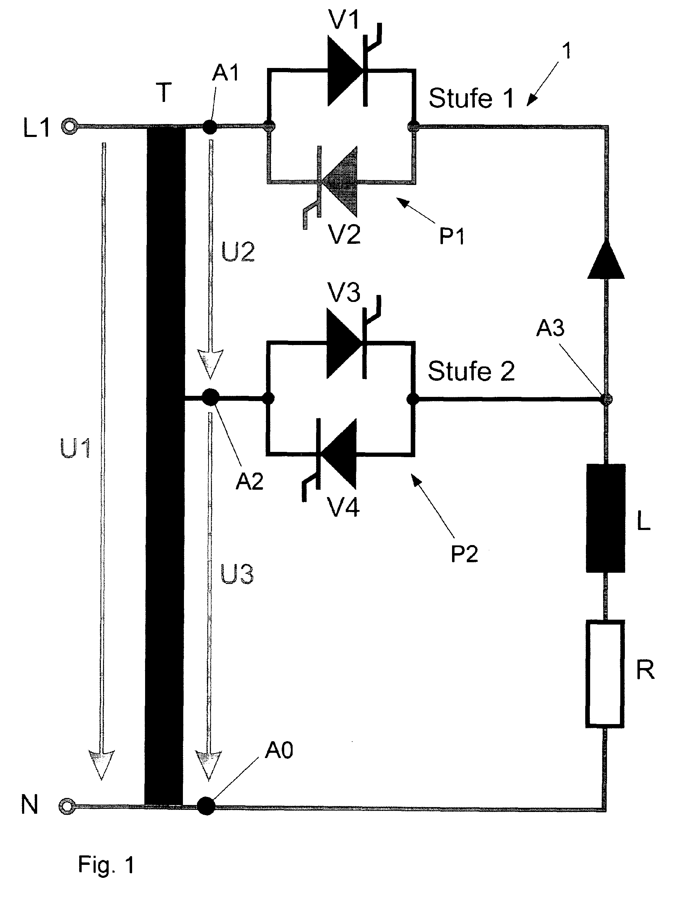

Der in der Figur 1 dargestellte Teil der erfindungsgemäßen Schaltungsanordnung 1 ist an eine Spannungsversorgungseinrichtung T angeschlossen. Bei der Spannungsversorgungseinrichtung T handelt es sich um einen Spartransformator, der primärseitig über Anschlüsse LN an eine Netzspannung U1 angeschlossen ist. Sekundärseitig hat der Spartransformator T drei Anschlüsse A0, A1, A2, wobei über den Anschluss A0 das Bezugspotential des Anschlusses N von der Primärseite auf die Sekundärseite geführt ist. Bei dem Anschluss A2 handelt es sich um eine Mittelanzapfung, an welcher eine Spannung U3 gegenüber dem Anschluss A0 anliegt, die um eine Spannung U2 kleiner ist als die Spannung, die zwischen dem Anschluss A1 und dem Anschluss A0 abfällt, wobei die Spannung U2 die Spannung ist, die zwischen dem Anschluss A1 und dem Anschluss A2 anliegt.

Die erfindungsgemäße Schaltungsanordnung 1 umfasst, und dieses sind neben Anschlüssen und Leitungen die einzigen in der Fig. 1 dargestellten Teile der Schaltungsanordnung 1, zwei Paare P1, P2 von antiparallel geschalteten steuerbaren Stromventilen in Form von Thyristoren V1, V2, V3, V4. Das erste Paar P1 mit den Thyristoren V1, V2 verbindet den ersten Anschluss A1 der Schaltungsanordnung 1 mit einem dritten Anschluss A3 der Schaltungsanordnung. Das zweite Paar P2 mit den Thyristoren V3, V4 verbindet den zweiten Anschluss A2 mit dem dritten Anschluss A3. Sowohl der Thyristor V1 des ersten Paares P1, als auch der Thyristor V3 des zweiten Paares P2 sind zwischen dem ersten Anschluss A1 beziehungsweise dem zweiten Anschluss A2 und dem dritten Anschluss A3 in Flussrichtung geschaltet. Der Thyristor V2 des ersten Paares P1 und der Thyristor V4 des zweiten Paares P4 sind dagegen zwischen dem ersten Anschluss A1 beziehungsweise dem zweiten Anschluss A2 und dem dritten Anschluss A3 in Sperrrichtung geschaltet. Zwischen dem dritten Anschluss A3 der erfindungsgemäßen Schaltungsanordnung 1, welcher einen Ausgang der Schaltungsanordnung 1 bildet, und dem Anschluss A0 der Spannungsversorgungseinrichtung T ist eine ohmsch-induktive Last R, L geschaltet, die durch eine Spule L und einen ohmschen Widerstand R symbolisiert ist.

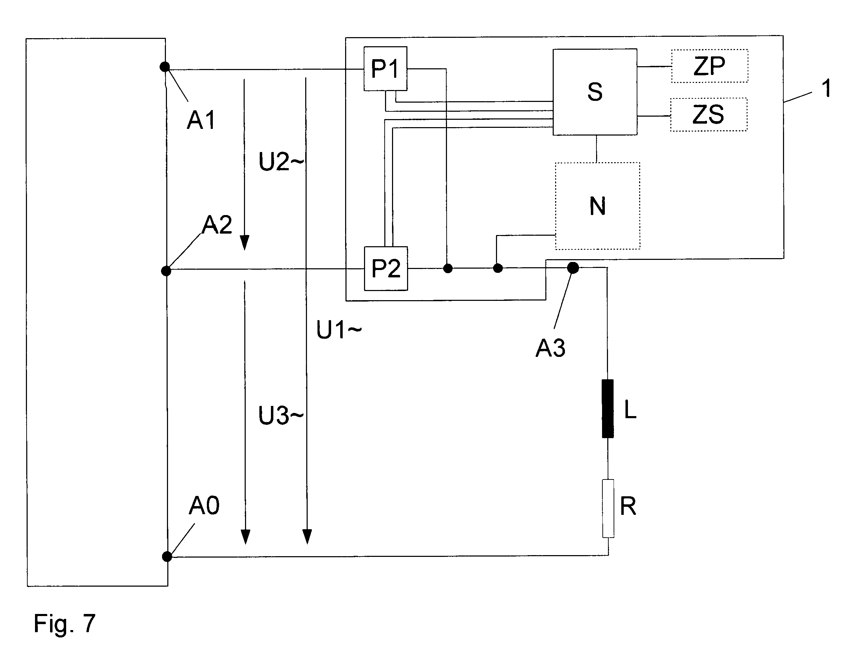

In Fig. 7 sind weitere Komponenten der erfindungsgemäßen Schaltungsanordnung 1 als Schaltungsblöcke dargestellt. Es handelt sich dabei um ein Steuermittel S und drei weitere Mittel ZP, ZS, N, die optional in der erfindungsgemäßen Schaltungsanordnung vorhanden sein können. Bei diesen weiteren drei Mitteln handelt es sich um ein Mittel ZP zum Einstellen eines Zeitpunktes, um ein Mittel ZS zum Einstellen einer Zeitspanne und um ein Mittel N zum Erkennen eines Null-Durchgangs des Stroms durch die ohmsch-induktive Last.

Das Steuermittel S ist über Leitungen mit den Steuerelektroden der Thyristoren V1, V2, V3, V4 verbunden, um diese gegebenenfalls zu zünden, d. h. zum Durchschalten anzusteuern.

Die Schaltungsanordnung 1 ist so ausgelegt, dass die ohmsch-induktive Last L, R entweder in der ersten Stufe oder in der zweiten Stufe mit Spannung aus der Spannungsversorgungseinrichtung T versorgt wird. In der ersten Stufe, in der die Spannung um die Spannung U2 höher ist als in der zweiten Stufe, erfolgt der Stromfluss über das erste Paar P1 der Thyristoren V1, V2. In der zweiten Stufe erfolgt dagegen die Spannungsversorgung über das zweite Paar P2 der Thyristoren V3, V4.

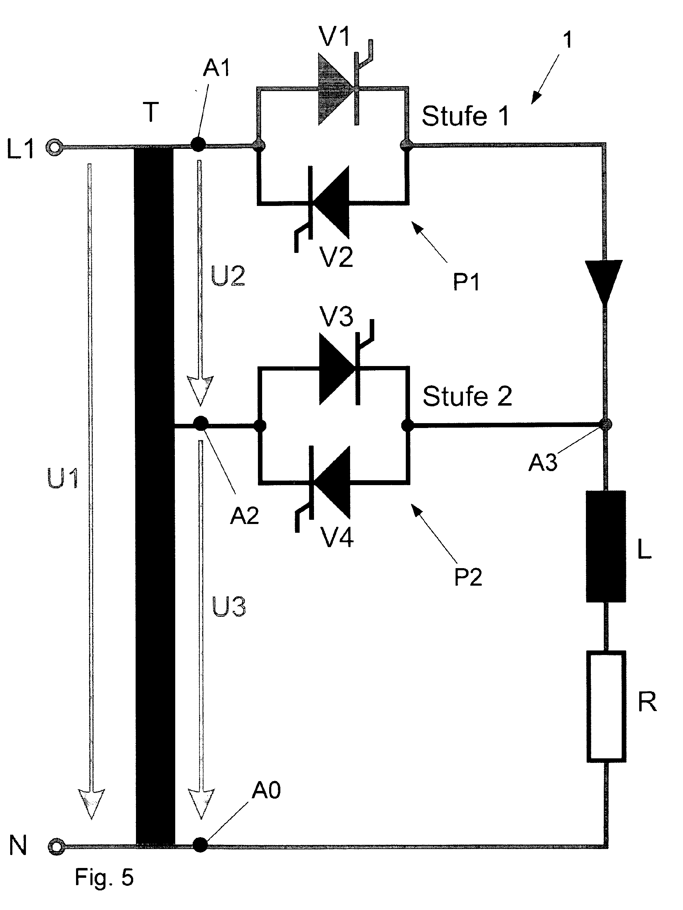

In der ersten Stufe wird der Strom während der negativen Halbwelle des Stroms über den Thyristor V2 geführt (Fig. 1). Während der positiven Halbwelle des Stroms wird der Strom über den Thyristor V1 geführt (Fig. 5).

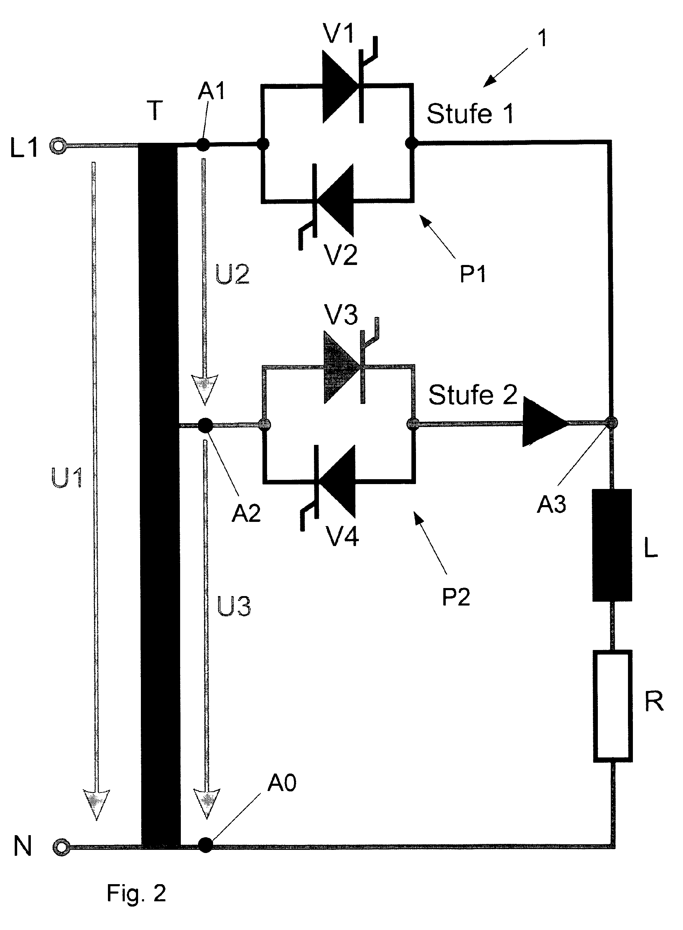

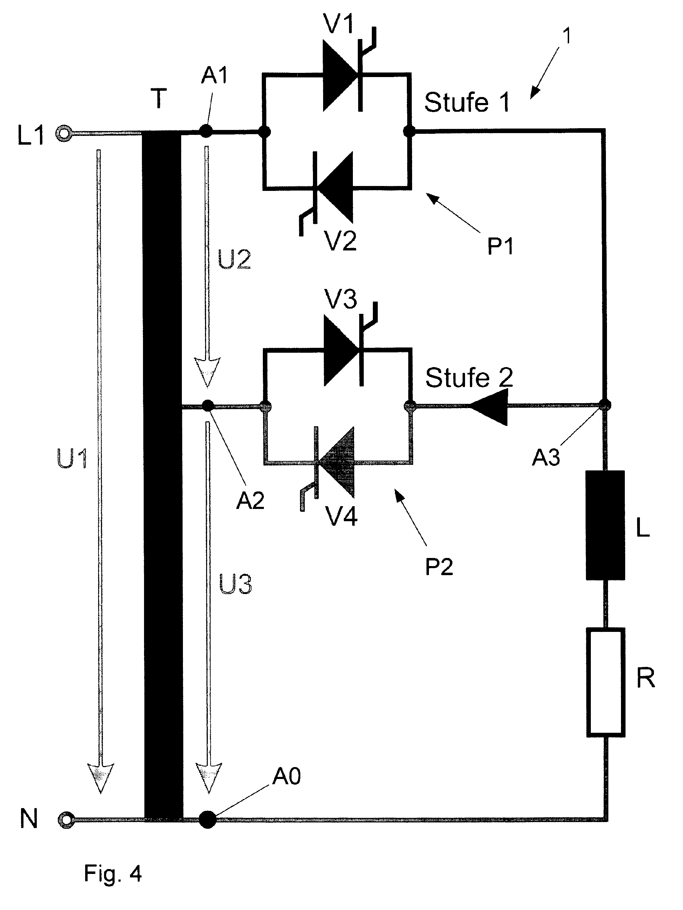

In der zweiten Stufe wird der Strom während der positiven Halbwelle über den Thyristor V3 (Fig. 2) und während der negativen Halbwelle über den Thyristor V4 (Fig. 4) geführt. Das Steuermittel S stellt das Zünden der Thyristoren V1, V2, V3, V4 während des Betriebs der Schaltungsanordnung 1 in der ersten Stufe und der zweiten Stufe sicher. Das Zünden erfolgt immer im Nulldurchgang der Spannung.

Mittels des Steuermittels S erfolgt auch das Umschalten zwischen der ersten Stufe und der zweiten Stufe und umgekehrt. Das Umschalten von der ersten Stufe zur zweiten Stufe wird anhand der Fig. 1 bis 3 und das Umschalten von der zweiten Stufe anhand der Figuren 4 bis 6 nachstehend erläutert.

Die erfindungsgemäße Schaltungsanordnung 1 ist so ausgelegt, dass ein Umschalten von der ersten Stufe auf die zweite Stufe oder ein Umschalten von der zweiten Stufe auf die erste Stufe immer während einer steigenden Flanke der Spannung erfolgt.

Üblicherweise erfolgt das Zünden der Thyristoren V1, V2, V3, V4 während des Betriebes in einer Stufe zum Zeitpunkt des Null-Durchgangs der steigenden Flanke der Spannung. Dieses ist auch für das Umschalten von der ersten Stufe auf die zweite Stufe vorgesehen (Fig. 1, 2).

Vor dem Umschalten von der ersten Stufe in die zweite Stufe ist daher der Thyristor V2 leitend und der Strom fließt vom Anschluss A0 durch die ohmsch-induktive Last L, R über den Anschluss A3 und den Thyristor V2 des ersten Paars P1 zum Anschluss A1. Zum Zeitpunkt des Null-Durchgangs der Spannung wird dann der Thyristor V3 zum Durchschalten angesteuert, wodurch der Thyristor V3 leitend wird.

Der Strom durch die Last L, R ist jedoch um die Phasenverschiebung ϕ gegenüber der Spannung nacheilend.

Das Nacheilen des Stroms eine Folge, die sich während des Umschaltens von der ersten Stufe zur zweiten Stufe bemerkbar machen.

Bedingt durch die Eigenschaften von Thyristoren sperrt der Thyristor V2, welcher vor dem Umschalten von der ersten Stufe in die zweite Stufe durchgeschaltet ist, erst wenn der Strom durch den Thyristor V2 Null wird. D. h., der Thyristor V2 bleibt für den Zeitpunkt zwischen dem Null-Durchgang der Spannung und dem Null-Durchgang des um den Winkel ϕ verschobenen Stroms durchgeschaltet. Gleichzeitig wird allerdings bereits ab dem Null-Durchgang der Spannung der Thyristor V3 angesteuert, so dass auch dieser durchschaltet. Der Thyristor V3 führt jedoch keinen Strom, da die Stromrichtung durch die Last L, R entgegen der Durchlassrichtung des Thyristors V3 gerichtet ist. Das gleichzeitige Durchschalten der Thyristoren V3 und V2 ist daher unproblematisch. Es ist lediglich ein Stromfluss von dem Anschluss A0 über die Last L, R, den Anschluss A3, den Thyristor V2 zum Anschluss A1 in dem Zeitraum zwischen dem Null-Durchgang der Spannung und dem Null-Durchgang des um den Winkel ϕ verschobenen Stroms möglich.

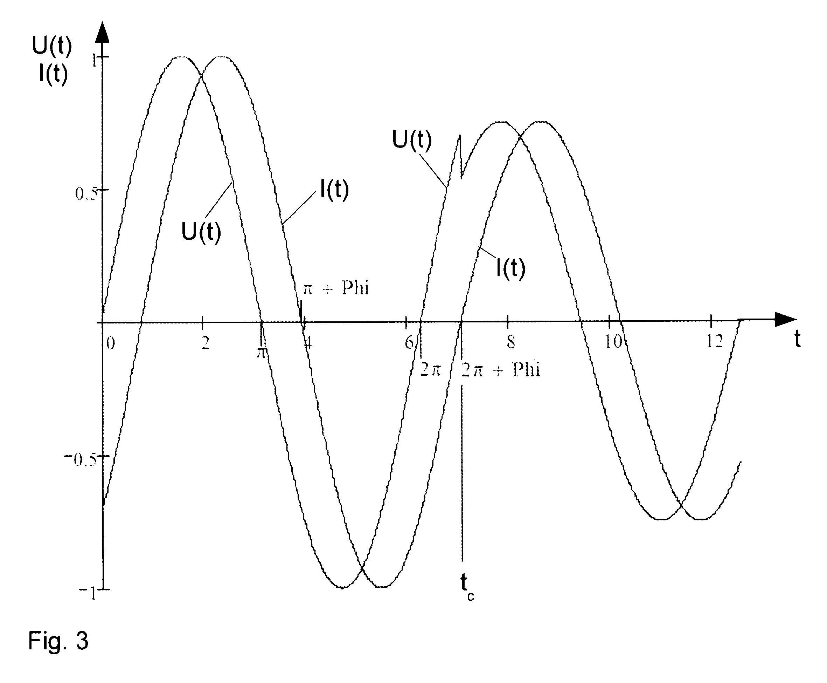

Sobald der Strom durch den Thyristor V2 verlischt und der Thyristor V2 sperrt, übernimmt der Thyristor V3 aufgrund der geänderten Stromrichtung die Stromführung und die Spannung geht um die zwischen den Anschlüssen A1 und A2 abfallende Spannung U2 zurück (Fig. 3, Zeitpunkt t_{C}).

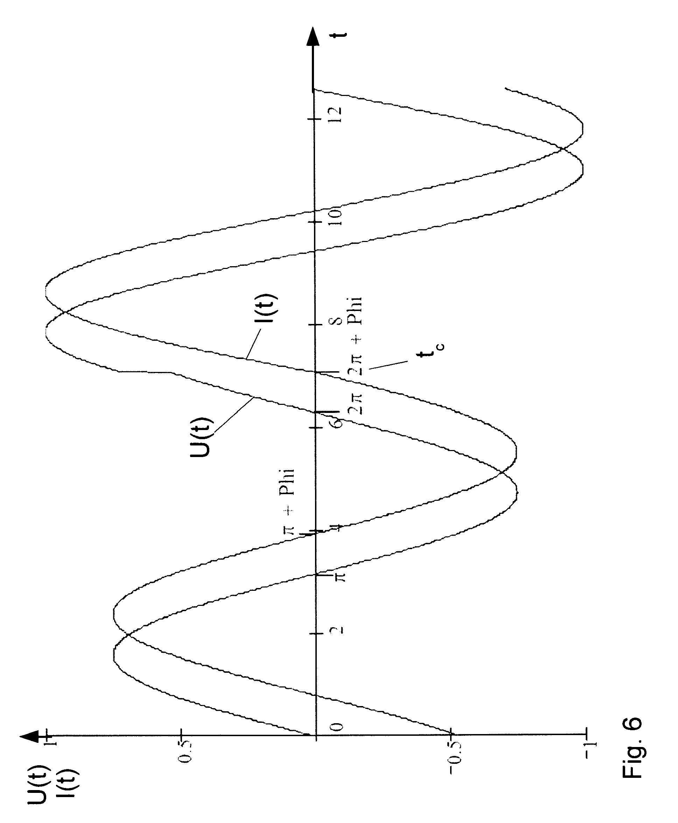

Aufwändiger ist dagegen das Umschalten von der zweiten Stufe in die erste Stufe der Spannungsversorgung der Last L, R. Vor dem Umschalten der Stufen, welches auch in diesem Fall während der ansteigenden Flanke der Spannung erfolgt, fließt der Strom vom Anschluss A0 über die Last L, R, den Anschluss A3, den Thyristor V4 zum Anschluss A2. Sobald nun im Zeitpunkt des Nulldurchgangs der Spannung der stromübernehmende Thyristor V1 gezündet wird, käme es zu einem Kurzschluss der Anschlüsse A1 und A2, da V1 und V4 für einen Strom vom Anschluss A1 zum Anschluss A2 in Durchlassrichtung geschaltet sind. Ein solcher Kurzschluss muss jedoch vermieden werden. Da der Thyristor V4 vor einem Nulldurchgang des um den Winkel ϕ verschobenen Stroms nicht sperrt, musste auf andere Art und Weise abgeholfen werden. Dieses ist **dadurch geschehen, dass** das Steuerungsmittel S den Thyristor V1 erst in dem Moment zum Durchschalten ansteuert, in dem der Strom durch den Thyristor V4 verlischt, also einen Null-Durchgang hat. In diesem Moment übernimmt der Thyristor V1 die Stromführung, was zu einem Sprung in der Spannung um den Betrag der Spannung U2 führt (siehe Fig. 6, Zeitpunkt t_{C}). Sobald die Übernahme durch das erste Paar P1 der Thyristoren V1 und V2 erfolgt ist, kann das Zünden der Thyristoren V1 beziehungsweise V2 zu den üblichen Zeitpunkten im Null-Durchgang der Spannung erfolgen.

Die erfindungsgemäße Schaltungsanordnung ist so eingerichtet, dass mit dem Mittel N zur Null-Durchgangserkennung der Null-Durchgang des Stroms durch die Last L, R ermittelt werden kann, um beim Umschalten von der zweiten zur ersten Stufe den frühesten Zündzeitpunkt des Thyristors V1 zu ermitteln. Ebenso könnte man den Zeitpunkt unmittelbar durch ein Mittel zum Einstellen des Zündzeitpunktes des Thyristors V1 vorgeben. Dieser kann beispielsweise rechnerisch aus der durch die Last L, R hervorgerufenen Phasenverschiebung berechnet werden, um dann mit dem Mittel ZP zum Einstellen des Zeitpunktes eingestellt zu werden. Zusätzlich kann um einem gleichzeitigen Stromfluss durch die Thyristoren V1 und V4 vorzubeugen ein Sicherheitszeitfenster, d. h. eine Zeitspanne mit dem Mittel ZS zum Einstellen der Zeitspanne eingestellt werden. Diese Zeitspanne gibt einen zeitlichen Abstand zwischen dem Null-Durchgang des Stroms und somit dem Verlöschen des Stroms durch den Thyristor V4 und dem Zündzeitpunkt des Thyristors V1 vor. Dieses führt zwar zu einer Lücke in der Spannung, je nach der Last führt dies allerdings nicht zu einem Ausfall oder zu Schäden derselben.

## Patentansprüche

1. Schaltungsanordnung (1) zur Umschaltung zwischen zumindest zwei Spannungsstufe einer Spannungsversorgungseinrichtung (T) mit folgenden Merkmalen:
- die Schaltungsanordnung (1) weist einen ersten Anschluss (A) zur Verbindung mit einem ersten Anschluss der Spannungsversorgungseinrichtung (T) mit einer Wechselspannung einer ersten Stufe auf;
- die Schaltungsanordnung (1) weist einen zweiten Anschluss (A2) zur Verbindung mit einem zweiten Anschluss der Spannungsversorgungseinrichtung (T) mit einer Wechselspannung einer zweiten Stufe auf,
- wobei die Wechselspannung der zweiten Stufe niedriger ist als die Wechselspannung der ersten Stufe;
- die Schaltungsanordnung (1) weist einen dritten Anschluss (A3) zur Verbindung mit einer ohmsch-induktiven Last (R, L) auf;
- der erste Anschluss (A1) ist über ein erstes Paar (P1) von antiparallel geschalteten steuerbaren Stromventilen (V1, V2) mit dem dritten Anschluss (A3) verbunden;
- der zweite Anschluss (A2) ist über ein zweites Paar (P2) von antiparallel geschalteten steuerbaren Stromventilen (V3, V4) mit dem dritten Anschluss (A3) verbunden;
- die Schaltungsanordnung (1) weist ein zum Steuern der Stromventile (V1, V2, V3, V4) geeignet und eingerichtetes Steuermittel (S) auf,
- welches zur Spannungsversorgung des dritten Anschlusses (A3) in der ersten Stufe mindestens ein Stromventil (V1, V2) des ersten Paares (P1) zum Durchschalten ansteuert und
- welches zur Spannungsversorgung des dritten Anschlusses (A3) in der zweiten Stufe mindestens ein Stromventil (V3, V4) des zweiten Paares (P2) zum Durchschalten ansteuert;
- das Steuermittel (S) ist zum Umschalten der Spannungsversorgung von der einen Stufe auf die andere Stufe geeignet und eingerichtet,
- wobei das Steuermittel (S) geeignet und eingerichtet ist, beim Umschalten von der ersten Stufe in die zweite Stufe oder von der zweiten in die erste Stufe das den Strom übernehmende Stromventil (V3, V1) zu einem Zeitpunkt (t_{C}) zum Durchschalten anzusteuern, der im Nulldurchgang des Stroms oder um eine Zeitspanne nach dem Nulldurchgang des Stroms liegt.

2. Schaltungsanordnung (1) nach Anspruch 1, **dadurch gekennzeichnet, dass** das Steuermittel (S) zum Umschalten zwischen den Stufen während einer steigende Flanke der Spannung geeignet und eingerichtet ist.

3. Schaltungsanordnung (1) nach Anspruch 2, **dadurch gekennzeichnet, dass** das Steuermittel (S) geeignet und eingerichtet ist, beim Umschalten von der zweiten Stufe auf die erste Stufe das den Strom übernehmende Stromventil (V1) des ersten Paares (P1) zu einem Zeitpunkt zum Durchschalten anzusteuern, der im Nulldurchgang des Stroms oder um eine Zeitspanne nach dem Nulldurchgang des Stroms liegt.

4. Schaltungsanordnung nach Anspruch 2 oder 3, **dadurch gekennzeichnet, dass** das Steuermittel (5) geeignet und eingerichtet ist, beim Umschalten von der ersten Stufe auf die zweite Stufe das den Strom übernehmende Stromventil (V3) des zweiten Paares (P2) zu einem Zeitpunkt zum Durchschalten anzusteuern, der im Nulldurchgang der Spannung, im Nulldurchgang des Stroms, zwischen dem Nulldurchgang der Spannung und dem Nulldurchgang des Stroms oder um eine Zeitspanne nach dem Nulldurchgang des Stroms liegt.

5. Schaltungsanordnung (1) nach Anspruch 1, **dadurch gekennzeichnet, dass** das Steuermittel (S) zum Umschalten zwischen den Stufen während einer fallenden Flanke der Spannung geeignet und eingerichtet ist.

6. Schaltungsanordnung (1) nach Anspruch 5, **dadurch gekennzeichnet, dass** das Steuermittel (S) geeignet und eingerichtet ist, beim Umschalten von der ersten Stufe auf die zweite Stufe das den Strom übernehmende Stromventil des zweiten Paares zu einem Zeitpunkt zum Durchschalten anzusteuern, der im Nulldurchgang des Stroms oder um eine Zeitspanne nach dem Nulldurchgang des Stroms liegt.

7. Schaltungsanordnung (1) nach Anspruch 5 oder 6, **dadurch gekennzeichnet, dass** das Steuermittel (S) geeignet und eingerichtet ist, beim Umschalten von der zweiten Stufe auf die erste Stufe das den Strom übernehmende Stromventil des ersten Paares zu einem Zeitpunkt zum Durchschalten anzusteuern, der im Nulldurchgang der Spannung, im Nulldurchgang des Stroms, zwischen dem Nulldurchgang der Spannung und dem Nulldurchgang des Stroms oder um eine Zeitspanne nach dem Nulldurchgang des Stroms liegt.

8. Schaltungsanordnung (1) nach einem der Ansprüche 1 bis 7, **dadurch gekennzeichnet, dass** die Schaltungsanordnung (1) Mittel (N) zur Erkennung eines Nulldurchgangs des Strom aufweist, die mit dem Steuermittel verbunden sind.

9. Schaltungsanordnung (1) nach einem der Ansprüche 1 bis 8, **dadurch gekennzeichnet, dass** die Schaltungsanordnung (1) ein Mittel (ZP) zum Einstellen des Zeitpunkts des Ansteuern des den Strom übernehmenden Stromventils (V1, V3) zum Durchschalten aufweist.

10. Schaltungsanordnung (1) nach einem der Ansprüche 1 bis 9, **dadurch gekennzeichnet, dass** die Schaltungsanordnung (1) ein Mittel (ZS) zum Einstellen der Zeitspanne zwischen dem Nulldurchgang des Stroms und dem Zeitpunkt des Ansteuern des den Strom übernehmenden Stromventils zum Durchschalten aufweist.

11. Schaltungsanordnung (1) nach einem der Ansprüche 1 bis 10, **dadurch gekennzeichnet, dass** die Stromventile Thyristoren (V1, V2, V3, V4) sind.

12. Schaltungsanordnung (1) nach einem der Ansprüche 1 bis 11, **dadurch gekennzeichnet, dass** die Schaltungsanordnung zur Umschaltung zwischen mehr als zwei Stufen geeignet und eingerichtet ist.

13. Schaltungsanordnung (1) nach einem der Ansprüche 1 bis 12, **dadurch gekennzeichnet, dass** die Spannungsversorgungseinrichtung (T) ein Transformator oder eine beliebige gleichphasige Spannungsversorgungseinrichtung ist.
